# EUROPEAN PATENT SPECIFICATION

(11) **EP 2 630 756 B1**
(45) Date of publication and mention of the grant of the patent: **01.08.2018**
(21) Application number: 11834607.1
(22) Date of filing: 18.10.2011
(51) Int. Cl.: H04W 48/18, H04W 88/04, H04W 88/06

(54) **METHOD AND APPARATUS FOR SHARING INTERNET CONNECTION BASED ON AUTOMATIC CONFIGURATION OF NETWORK INTERFACE**
VERFAHREN UND VORRICHTUNG ZUR TEILUNG EINER INTERNETVERBINDUNG AUF BASIS DER AUTOMATISCHEN KONFIGURATION EINER NETZWERKSCHNITTSTELLE
PROCÉDÉ ET APPAREIL POUR PARTAGER UNE CONNEXION INTERNET SUR LA BASE D'UNE CONFIGURATION AUTOMATIQUE D'UNE INTERFACE RÉSEAU

(30) Priority: 18.10.2010 KR 20100101468
(43) Date of publication of application: 28.08.2013
(73) Proprietor: Samsung Electronics Co., Ltd., Gyeonggi-do 443-742 (KR)
(72) Inventor: LIM, Kyung-Soo, Hwaseong-si Gyeonggi-do 445-984 (KR); KIM, Dae-Jin, Seoul 158-834 (KR); LEE, Sun-Kee, Suwon-si Gyeonggi-do 443-390 (KR); PARK, Jong-Man, Suwon-si Gyeonggi-do 443-751 (KR); LEE, Tae-Hee, Suwon-si Gyeonggi-do 443-751 (KR)
(74) Representative: HGF Limited
(86) International application number: PCT/KR2011/007757
(87) International publication number: WO 2012/053807

(56) References cited:
- EP-A1- 1 924 025
- WO-A1-2009/135986
- WO-A2-2007/096884
- KR-A- 20050 035 798
- KR-A- 20050 035 825
- US-A1- 2004 157 638
- US-A1- 2004 209 622
- US-A1- 2007 217 436
- US-A1- 2008 253 313

## Description

### Technical Field

The present invention relates generally to a method and apparatus for sharing an Internet connection, and more particularly, to a method and apparatus for configuring a network interface for a predetermined device for sharing an Internet connection with another device.

### Background Art

Mobile communication devices may typically be connected to the Internet via a mobile communication network or a wireless Local Area Network (LAN). However, Internet connections via the mobile communication network generate large amounts of traffic in the mobile communication network. However, a wireless LAN may only be used at a location that has an Access Point (AP). Furthermore, a wireless LAN requires a user to perform a complicated network configuration in order to access an Internet connection.
WO2007/096884 A2 discloses a method for providing a wireless Internet connection for Wi-Fi-enables devices.
US2004/157638 A1 discloses a multi-access solid state storage device in which storage of the device may connect to an external host system via a USB cable connection.
US 2008/253313 A1 discloses a method for providing a soft mobile phone client with a PC card for providing VoIP services to a computer.

### Disclosure of Invention

### Technical Solution

The present invention has been made to address at least the above problems and/or disadvantages and to provide at least the advantages described below. Accordingly, an aspect of the present invention provides a method and apparatus for easy configuration of a network interface for an Internet connection.

### Advantageous Effects of Invention

According to the exemplary embodiments of the present invention, When the first device and the second device are connected to each other via a cable, network interface is preferably automatically configured for a user who is unfamiliar with configuring a network interface to share an Internet connection.

### Brief Description of Drawings

The above and other aspects, features and advantages of the present invention will become more apparent from the following detailed description when taken in conjunction with the accompanying drawings, in which:
FIG. 1 is a diagram illustrating a system for sharing an Internet connection, according to an embodiment of the present invention;
FIG. 2 is a flowchart illustrating an Internet connection configuring and sharing methodology, according to an embodiment of the present invention;
FIGS. 3a and 3b is a diagram illustrating a user interface for selecting an Internet connection, according to an embodiment of the present invention;
FIGS. 4a and 4b show messages transmitted and received for configuring network interfaces, according to an embodiment of the present invention;
FIG. 5 is a flowchart illustrating a method of sharing an Internet connection via a Universal Serial Bus (USB) cable, according to an embodiment of the present invention;
FIG. 6 is a flowchart illustrating a method of configuring and sharing an Internet connection via a wireless LAN, according to an embodiment of the present invention;
FIG. 7 is a flowchart illustrating a method of configuring and sharing an Internet connection via tethering, according to an embodiment of the present invention;
FIG. 8 is a flowchart illustrating a method of configuring and sharing an Internet connection via Soft AP configuration, according to an embodiment of the present invention;
FIG. 9 is a diagram illustrating an Internet Connection Sharing (ICS) device of a first device, according to an embodiment of the present invention; and
FIG. 10 is a diagram illustrating an ICS device of a second device, according to an embodiment of the present invention.

### Best Mode

According to one aspect of the present invention, a method is provided for configuring a first device to share an Internet connection. A program for configuring network interfaces is transmitted from a storage space of the first device to a second device via a cable. Messages are exchanged between the first device and the second device, via the cable, for configuration of network interfaces of the first device and the second device, after the second device executes the program, the network interfaces being between the first device and the second device. A network interface of the first device is configured in accordance with the program and the messages exchanged between the first device and the second device. The Internet connection of at least one of the first device and the second device is shared based on the configured network interface of the first device.

According to another aspect of the present invention, a method is provided for configuring sharing of an Internet connection at a second device. A program for configuring network interfaces is received at the second device, from a storage space of a first device, via a cable. The program is executed on the second device. Messages are exchanged between the first device and the second device, via the cable, for configuration of network interfaces of the first device and the second device, the network interfaces being between the first device and the second device. A network interface of the second device is configured in accordance with the program and the messages exchanged between the first device and the second device. The Internet connection of at least one of the first device and the second device is shared based on the configured network interface of the second device.

According to an aspect of the present invention, a method is provided for configuring sharing of an Internet connection. A program for configuring network interfaces is transmitted from a storage space of a first device to a second device via a cable. The program is executed at the second device. Messages are exchanged between the first device and the second device, via the cable, for configuration of network interfaces of the first device and the second device, after the second device executes the program, the network interfaces being between the first device and the second device. The network interfaces of the first device and the second device are configured in accordance with the program and the messages exchanged between the first device and the second device. The Internet connection of at least one of the first device and the second device is shared based on the configured network interfaces of the first device and the second device.

According to an additional aspect of the present invention, an Internet connection configuring apparatus of a first device is provided for configuring sharing of an Internet connection. The apparatus includes a program transmitting unit that transmits a program for configuring network interfaces from a storage space of the first device to a second device via a cable, wherein the program is stored in the first device. The apparatus also includes a network configuring unit that exchanges messages between the first device and the second device for configuration of network interfaces of the first device and the second device, after the second device executes the program, the network interfaces being between the first device and the second device, configures a network interface of the first device in accordance with the program and the messages exchanged between the first device and the second device, and shares the Internet connection of at least one of the first device and the second device based on the configured network interface of the first device.

According to a further aspect of the present invention, an Internet connection configuring apparatus of a second device is provided for configuring sharing of an Internet connection. The apparatus includes a program receiving unit that receives a program for configuring network interfaces at the second device, from a storage space of the first device, via a cable, wherein the program is stored in the first device. The apparatus also includes a network configuring unit that exchanges messages between the first device and the second device for configuration of network interfaces of the first device and the second device, after the second device executes the program, the network interfaces being between the first device and the second device, configures a network interface of the second device in accordance with the program and the messages exchanged between the first device and the second device, and shares the Internet connection of at least one of the first device and the second device based on the configured network interface of the second device.

According to another aspect of the present invention, an article of manufacture is provided for configuring sharing of an Internet connection at a first device. The article of manufacture includes a machine readable medium containing one or more programs which when executed implement the steps of: transmitting a program for configuring network interfaces from the first device to a second device via a cable, wherein the program is stored in the first device; exchanging messages between the first device and the second device, via the cable, for configuration of network interfaces of the first device and the second device, after the second device executes the program; configuring a network interface of the first device in accordance with the program and the messages exchanged between the first device and the second device; and sharing the Internet connection of at least one of the first device and the second device based on the configured network interface of the first device.

Additionally, according to another aspect of the present invention an article of manufacture is provided for configuring sharing of an Internet connection at a second device. The article of manufacture includes a machine readable medium containing one or more programs which when executed implement the steps of: receiving a program for configuring network interfaces at the second device, from a first device, via a cable, wherein the program is stored in the first device; executing the program on the second device; exchanging messages between the first device and the second device, via the cable, for configuration of network interfaces of the first device and the second device; configuring a network interface of the second device in accordance with the program and the messages exchanged between the first device and the second device; and sharing the Internet connection of at least one of the first device and the second device based on the configured network interface of the second device.

### Mode for Invention

This application claims priority under 35 U.S.C. §119(a) to Korean Patent Application No. 10-2010-0101468, filed on October 18, 2010, in the Korean Intellectual Property Office.

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

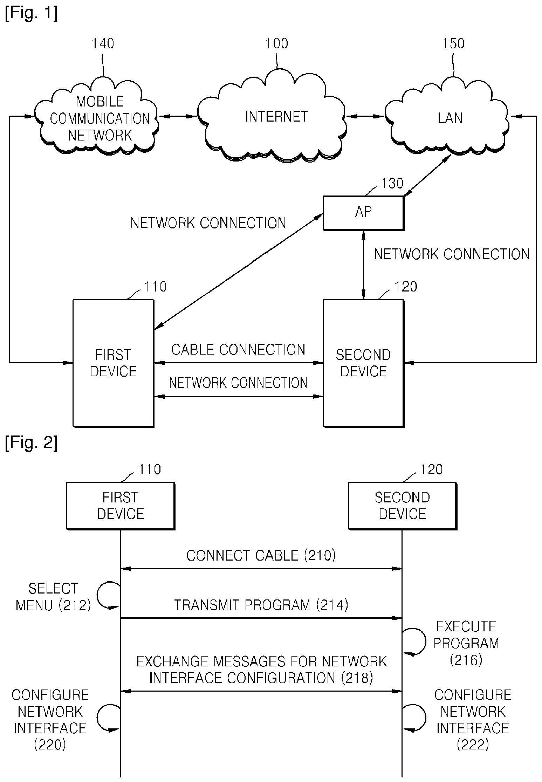

FIG. 1 is a diagram illustrating a system for sharing an Internet connection, according to an embodiment of the present invention.

FIG. 1 shows the system in which a second device 120 shares an Internet connection of a first device 110, or the first device 110 shares an Internet connection of the second device 120. The first device may be embodied as a mobile communication terminal, and the second device may be embodied as a Personal Computer (PC), for example.

The first device 110 accesses a mobile communication network 140 by using a built-in mobile communication network interface or accesses a LAN 150 by using a built-in wireless LAN interface. When accessing the LAN 150 via the built-in wireless LAN interface, the first device 110 accesses the LAN 150 via an AP 130. Specifically, the first device 110 may establish an Internet connection via the mobile communication network 140 or the LAN 150.

The term "mobile communication network" refers to a network that provides cellular-based mobile communication services to the first device 110, such as, for example, Global System for Mobile communications (GSM), Code Division Multiple Access (CDMA), Universal Mobile Telecommunication System (UMTS), and Wideband Code Division Multiple Access (WCDMA).

The second device 120 wirelessly accesses the LAN 150 via a built-in wireless LAN interface or accesses the LAN 150 in a wire form. Specifically, the second device 120 establishes an Internet connection by accessing the LAN 150 through a wired or wireless connection.

However, there may be times when the first device 110 or the second device 120 isunable to establish an Internet connection on its own. For example, the first device 110 may be unable to access the mobile communication network 140 or the LAN 150, or the second device 120 may be unable to access the LAN 150. A device that is unable to establish an Internet connection on its own may access Internet 100 via another device, which is referred to as ICS.

An Internet connection of another device may also be shared when both the first device 110 and the second device 120 are able to establish Internet connections by themselves. Data transmission rates and data communication charges for Internet access via the mobile communication network 140 and the LAN 150 may differ. Therefore, even if both the first device 110 and the second device 120 are able to establish Internet connections on their own, it is preferable to access the Internet 100 via an Internet connection having higher data transmission rates or an Internet connection without data communication charges, resulting in the sharing of an Internet connection of another device.

However, in order to share an Internet connection, it is necessary to configure a network interface of the first device 110 and a network interface of the second device 120. This configuration can be difficult for a user who is unfamiliar with configuring a network interface to share an Internet connection. Therefore, a network interface, is preferably automatically configured. According to an embodiment of the present invention shown in FIG. 1, an Internet connection is automatically shared based on an exchange of network information via a cable connection.

When the first device 110 and the second device 120 are connected to each other via a predetermined cable, for example, a USB cable, programs for configuring network interfaces are executed on the first device 110 and the second device 120, and messages that include network information are exchanged based on the executed programs. The network interfaces of the first device 110 and the second device 120 are configured based on the network information included in the exchanged messages. Thus, a private network is established between the first and second devices 110 and 120. A private network connection may be established by switching a cable connection used for exchange of network information to an Ethernet mode or via a wireless LAN interface without switching the cable connection to the Ethernet mode.

FIG. 2 is a flowchart illustrating an Internet connection configuring and sharing methodology, according to an embodiment of the present invention.

Referring to FIG. 2, in step 210, a cable connection is established between the first device 110 and the second device 120. A cable used according to an embodiment of the present invention may be a USB cable. When the first device 110 is connected to the second device 120 via the cable, the second device 120 automatically recognizes the first device 110 and establishes a cable connection to the first device 110 based on a driver supporting USB cable communication.

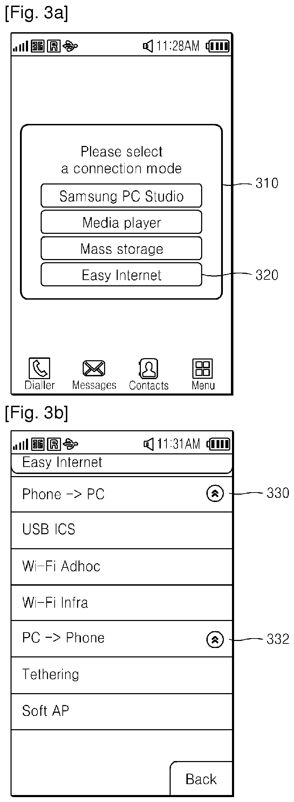

In step 212, the first device 110 selects a predetermined menu. When the cable connection is established between the first device 110 and the second device 120, a user interface is displayed on a display unit of the first device 110. The user interface includes items corresponding to various functions that may be performed based on the cable connection. A user of the first device 110 may select an item corresponding to the ICS from among the items in the user interface. A detailed description of the user interface is provided below with reference to FIGS. 3a and 3b.

FIGS. 3a and 3b illustrate a user interface for selecting an Internet connection, according to an embodiment of the present invention.

When a cable connection is established between the first device 110 and the second device 120, a user interface 310 is displayed on the display unit of the first device 110. The user interface includes menu items corresponding to a plurality of functions that may be performed based on the cable connection.

The items that correspond to the plurality of functions include, for example, "Samsung PC Studio", "Media player", "Mass storage", and "Easy Internet" 320. A user may select the item "Easy Internet" 320, which is related to ICS, from among the items.

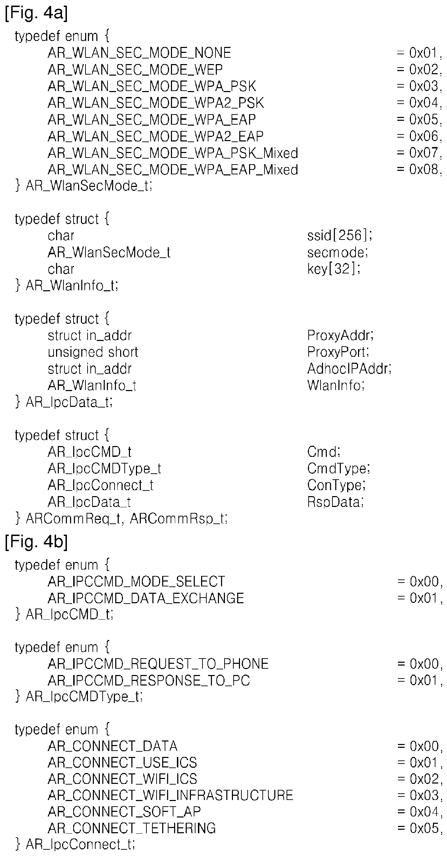

When the item "Easy Internet" 320 is selected, an optimal ICS method may be automatically selected. The optimal ICS method may be automatically selected based on various criteria, such as, for example, the establishment of Internet connections of the first device 110 and the second device 120, the data transmission rate of the Internet connections, and the charges for data transmission and reception. A method of sharing an Internet connection is described in greater detail below with reference to FIG. 4b.

According to another embodiment of the present invention, when the item "Easy Internet" 320 is selected, items corresponding to a plurality of ICS methods may be displayed on a screen of the first device 110, as shown in FIG. 3b. The user may select any one of the displayed items. Referring to FIG. 3b, three modes may be displayed on the screen of the first device 110 as items 330 related to methods through which the first device 110 shares an Internet connection of the second device 120. These three modes include, for example, "USB ICS", "Wi-Fi Adhoc", and "Wi-Fi Infra" Two modes may be displayed on the screen of the first device 110 as items related to methods through which the second device 120 shares an Internet connection of the first device 110. These two modes include, for example, "Tethering" and "Soft AP".

When a user selects the item "Easy Internet" 320 and one of the plurality of items shown in FIG. 3b, subsequent operations for configuring a network interface, according to an ICS method of the selected item, are performed.

Referring back to FIG. 2, in step 214, the first device 110 transmits a program for configuring an Internet connection to the second device 120 via the cable connection established in step 210. The program for configuring the Internet connection configures a network interface of the first device 110 and a network interface of the second device 120, via an exchange of predetermined messages. The program may be an executable file.

When an ICS method is determined automatically or via a user selection in step 212, the second device 120 recognizes the first device 110 as a predetermined mobile storage medium, such as, for example, a USB memory or a mobile hard disk drive. A program stored in a predetermined storage space of the first device 110 is transmitted to the second device 120, in step 214.

When the second device 120 recognizes the first device 110 as a predetermined storage device, a list of tasks the second device 120 may perform with respect to a mobile storage medium may be displayed on a screen of the second device 120. The list of tasks may include, for example, media playback, auto-run, and folder exploration.

When a user selects the auto-run function from among the functions displayed on the screen of the second device 120, a program stored in a predetermined storage space of the first device 110 is transmitted to the second device 120 and automatically executed, in step 216. Since the first device 110 provides a program for configuring the Internet connection to the second device 120, the second device 120 does not need to have that program installed in advance. Furthermore, the second device 120 does not need to continue possessing the program after configuration of the Internet connection is completed.

In step 216, the second device 120 executes the program received in step 214. As described above, the program received in step 214 may be automatically executed when a user selects an auto-run function from among the functions displayed on the screen of the second device 120. Alternatively, when the program is received in operation 214, the program may be automatically executed without user intervention.

In step 218, the first device 110 and the second device 120 exchange messages for ICS configuration. The messages are exchanged according to an ICS method that is either automatically selected or selected by the user from among the plurality of ICS methods in step 212.

The program for configuring the Internet connection is already being executed on the first device 110, whereas the program for configuring the Internet connection is executed on the second device 120 in step 216. Therefore, application layer messages based on programs executed on the first and second devices 110 and 120 are exchanged via the cable connection established in step 210. Exchanged messages include information for configuring network interfaces for ICS. A detailed description of the exchanged messages is provided below with reference to FIGS. 4a and 4b.

FIGS. 4a and 4b show messages transmitted and received for configuring network interfaces, according to an embodiment of the present invention.

Referring to FIG. 4a, the messages exchanged in step 218 include "ARCommReq_t" and "ARCommRsp_t." The "ARCommReq_t" and "ARCommRsp_t" define a request message and a response message exchanged between the first and second devices 110 and 120. When the first device 110 shares an Internet connection of the second device 120, the first device 110 may transmit "ARCommReq_t" to the second device 120, and the second device 120 may transmit "ARCommRsp_t" to the first device 110 in response to the "ARCommReq_t." When the second device 120 shares an Internet connection of the first device 110, the second device 120 may transmit "ARCommReq_t" to the first device 110, and the first device 110 may transmit "ARCommRsp_t" to the second device 120 in response to the "ARCommReq_t."

The "ARCommReq_t" and "ARCommRsp_t" may include "AR_IpcCMD_t," "AR_IpcCMDType_t," "AR_IpcConnect_t," and "AR_IpcData_t."

As shown in FIG. 4b, the "AR-IpcCMD_t" defines whether the cable connection established in step 210 is a USB cable connection for general data exchange or a USB cable connection for network interface configuration, according to embodiments of the present invention. According to embodiments of the present invention, network information for ICS configuration is exchanged via a cable connection. Therefore, the "AR_IpcCMD_t" defines whether the cable connection is used for exchanging the network information. When the cable connection is for general data exchange, the "AR_IpcCMD_t" is set to "0x01." On the contrary, when the cable connection is used for exchanging network information, according to an embodiment of the present invention, the "AR_IpcCMD_t" is set to "0x00."

As shown in FIG. 4b, the "AR_IpcCMDType_t" includes information indicating the type of message. The "AR_IpcCMDType_t" may include information indicating whether the "ARCommReq_t" is a request message of the first device 110 with respect to the second device 120, or the "ARCommReq_t" is a request message of the second device 120 with respect to the first device 110. The "AR_IpcCMDType_t" may also include information for indicating whether the "ARCommRsp_t" is a response message of the first device 110 with respect to the second device 120, or the "ARCommRsp_t" is a response message of the second device 120 with respect to the first device 110.

As shown in FIG. 4b, the "AR_IpcConnect_t" includes information regarding ICS methods. The "AR_IpcConnect_t" includes information for determining whether an ICS mode is a "USB ICS" mode in which the first device 110 shares an Internet connection of the second device 120 via a cable connection, a "Wi-Fi Adhoc" mode in which the first device 110 shares an Internet connection of the second device 120 via a wireless LAN connection, a "Wi-Fi Infra" mode in which the first device 110 accesses an AP which has already established a network connection with the second device 120, a "Soft AP" mode in which at least one device including the second device 120 shares an Internet connection of the first device 110 by using the first device 110 as an AP, or a "Tethering" mode in which the second device 120 shares an Internet connection of the first device 110 via a cable connection.

The "AR_IpcData_t" includes information for wireless LAN configuration. Since an Internet connection is shared via a wireless LAN in the "Wi-Fi Adhoc" mode, the "Wi-Fi Infra" mode, and the "Soft AP" mode, information for configuration of a wireless LAN interface is included in the "AR_IpcData_t."

In detail, the "AR_IpcData_t" may include information regarding proxy addresses, proxy ports, and Internet Protocol (IP) addresses required for an Adhoc connection for establishing a private network. Furthermore, information regarding Service Set Identifiers (SSIDs), security modes, and security keys included in the "AR_Wlaninfo_t" may also be included in the "AR_IpcData_t." The "AR_Wlaninfr_t" is information regarding a security mode of a wireless LAN and may include "AR_WlanSecmode_t." The "AR_WlanSecmode_t" includes information regarding a plurality of security modes for encryption of wireless LAN communication. Therefore, "AR_WlanSecmode_t" may indicate a security mode by which wireless LAN communication is encrypted from among the plurality of security modes, such as, for example, "WEP", "WPA_PSK", "WPA2_PSK", "WPA_EAP", "WPA2_EAP", "WPA_PSK_Mixed", and "WPA_EAP_Mixed."

Referring again to FIG. 2, in step 220, the first device 110 configures a network interface for sharing an Internet connection. The configuration of the network interface may be a configuration of the network interface for providing an Internet connection of the first device 110 to the second device 120, or a configuration of the network interface for sharing an Internet connection of the second device 120.

In the same regard, in step 222, the second device 120 configures a network interface for sharing an Internet connection. The configuration of the network interface may be a configuration of the network interface for providing an Internet connection of the second device 120 to the first device 110 or a configuration of the network interface for sharing an Internet connection of the first device 110.

Steps 218 through 222 may be performed in an order different from that shown in FIG. 2. For example, when the first device 110 shares an Internet connection of the second device 120, the second device 120 may configure its network interface for sharing the Internet connection and transmit network information required for configuring a network interface of the first device 110 based on a result of the configuration. Next, the first device 110 may configure its network interface based on the received network information.

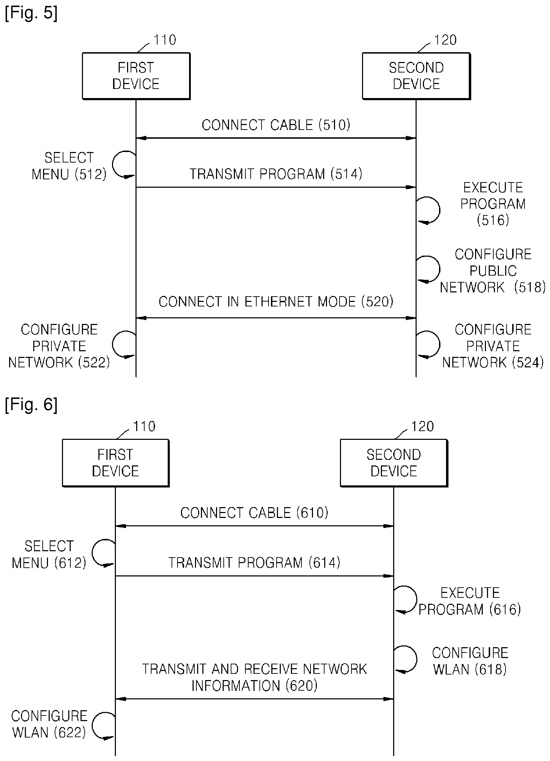

FIG. 5 is a flowchart illustrating a method of sharing an Internet connection via a USB cable, according to an embodiment of the present invention.

In step 510, a cable connection is established between the first device 110 and the second device 120. As described above, a cable used herein may be a USB cable, for example. Step 510 corresponds to step 210 of FIG. 2.

In step 512, the first device 110 selects a predetermined menu. Step 512 corresponds to step 212 of FIG. 2.

In step 514, the first device 110 transmits a program for configuring an Internet connection to the second device 120 via the cable connection established in step 510. Step 514 corresponds to step 214 of FIG. 2.

In step 516, the second device 120 executes the program received in step 514. Step 516 corresponds to step 216 of FIG. 2.

In step 518, the second device 120 configures a LAN interface to access a public network. The embodiment of the present invention illustrated in FIG. 5 provides a method by which the first device 110 shares an Internet connection of the second device 120, and thus, the second device 120 needs to be connected to the Internet in advance. The second device 120 is allocated an IP address of the public network from an Internet Service Provider (ISP) and configures a Domain Name System (DNS). Therefore, a LAN connection is established. Furthermore, to connect the first device 110 to a private network, IP addresses of the private network are allocated to the first device 110 and the second device 120, and subnet masks are set up.

In step 520, the second device 120 transmits network information for configuration of a private network to the first device 110. The second device 120 may transmit information regarding an IP address, a gateway address, and a subnet mask of the private network that are allocated to the first device 110.

Furthermore, in step 520, the cable connection between first device 110 and the second device 120 is switched to Ethernet mode. This enables the cable connection established in step 510 to operate as a network connection for sharing an Internet connection.

In step 522, the first device 110 configures its network interface to establish a private network connection with the second device 120. The first device 110 configures an address of the network interface, the gateway address, and the subnet mask, based on the IP address of the private network allocated from the second device 120.

In step 524, the second device 120 configures its network interface to establish a private network connection with the first device 110. The second device 120 may configure the IP address of the private network and the subnet mask. When the configuration is completed, the first device 110 shares an Internet connection of the second device 120 via the USB cable connection, which is operating in the Ethernet mode.

FIG. 6 is a flowchart illustrating a method of configuring and sharing an Internet connection via a wireless LAN, according to an embodiment of the present invention.

In step 610, a cable connection is established between the first device 110 and the second device 120. Step 610 corresponds to step 210 of FIG. 2.

In step 612, the first device 110 selects a predetermined menu. Step 612 corresponds to step 212 of FIG. 2.

In step 614, the first device 110 transmits a program for configuring an Internet connection to the second device 120 via the cable connection established in step 610. Step 614 corresponds to the step 214 of FIG. 2.

In step 616, the second device 120 executes the program received in step 614. Step 616 corresponds to step 216 of FIG. 2.

In step 618, the second device 120 configures a LAN interface to access a public network. As in the embodiment of FIG. 5, the embodiment of the present invention illustrated in FIG. 6 provides a method in which the first device 110 shares an Internet connection of the second device 120. Thus, the second device 120 needs to be connected to the Internet in advance. Here, the second device 120 is allocated an IP address from the public network of an ISP and configures a DNS. Therefore, a LAN connection is established. Furthermore, to connect the first device 110 to a private network, the second device 120 configures its wireless LAN interface. An SSID, security, a wireless LAN IP, and a subnet mask may be configured. Configuration of security may include the configuration of an encryption key and an encryption method used for encrypting wireless LAN communication.

In step 620, the second device 120 transmits network information required for the first device 110 to configure its wireless LAN interface. The second device 120 transmits information regarding an IP address of the wireless LAN allocated, a gateway address, a subnet mask, and a proxy address to the first device 110.

In step 622, the first device 110 configures its wireless LAN interface based on the information received in step 620. The first device 110 configures the IP address of the wireless LAN interface, the gateway address, the subnet mask, and the proxy address of the wireless LAN interface. When the configuration is completed, the first device 110 shares an Internet connection of the second device 120 via the wireless LAN connection.

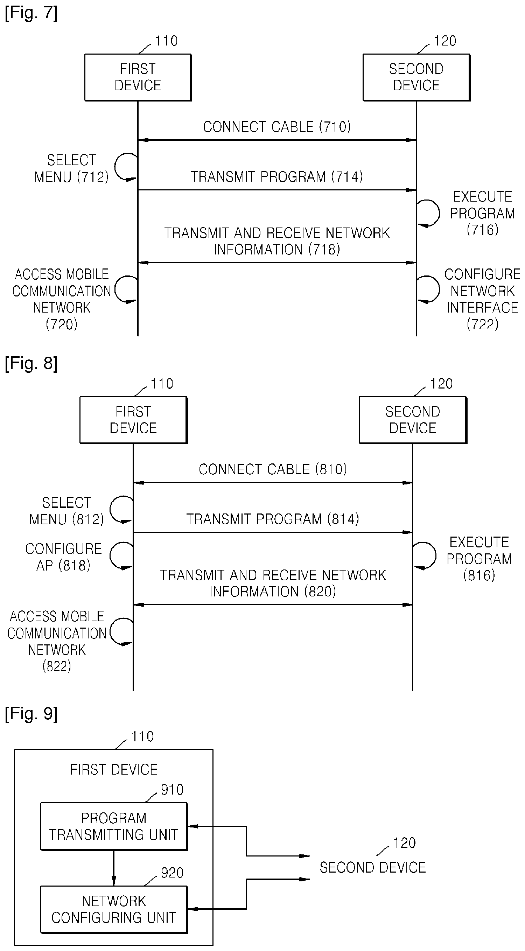

FIG. 7 is a flowchart illustrating a method of configuring and sharing an Internet connection via tethering, according to an embodiment of the present invention.

In step 710, a cable connection is established between the first device 110 and the second device 120. Step 710 corresponds to step 210 of FIG. 2.

In step 712, the first device 110 selects a predetermined menu. Step 712 corresponds to step 212 of FIG. 2.

In step 714, the first device 110 transmits a program for configuring an Internet connection to the second device 120 via the cable connection established in step 710. Step 714 corresponds to step 214 of FIG. 2.

In step 716, the second device 120 executes the program received in step 714. Step 716 corresponds to step 216 of FIG. 2.

In step 718, the first device 110 transmits information required by the second device 120 to share an Internet connection of the first device 110. Since the first device 110 and the second device 120 need to establish a private network via a cable connection and share the Internet connection of the first device 110 via the cable connection, the first device 110 transmits information required for establishing a private network to the second device 120. The first device 120 transmits, to the second device 120, an IP address in the private network, a gateway address, and a DNS address that are allocated to the second device 120. The first device 110 may also transmit a proxy address and information regarding port configuration to the second device 120.

When all information regarding network configuration is transmitted, the cable connection is switched to Ethernet mode, and the first device 110 establishes an Internet connection via a mobile communication network, in step 720. Furthermore, the first device 110 configures a Network Access Translation (NAT) based on the IP address in the private network and the port allocated to the second device 120.

In step 722, the second device 120 configures its network interface based on the information received in step 718. After steps 720 and 722 are performed, the second device 120 shares the Internet connection of the first device 110.

FIG. 8 is a flowchart illustrating a method of configuring and sharing an Internet connection via Soft AP configuration, according to an embodiment of the present invention. FIG. 8 shows a case in which the first device 110, as the wireless LAN AP, shares an Internet connection with a plurality of devices, including the second device 120.

In step 810, a cable connection is established between the first device 110 and the second device 120. Step 810 corresponds to step 210 of FIG. 2.

In step 812, the first device 110 selects a predetermined menu. Step 812 corresponds to step 212 of FIG. 2.

In step 814, the first device 110 transmits a program for configuring an Internet connection to the second device 120 via the cable connection established in step 810. Step 814 corresponds to step 214 of FIG. 2.

In step 816, the second device 120 executes the program received in step 814. Step 816 corresponds to step 216 of FIG. 1.

In step 818, the first device 110 configures its network interface to function as an AP. The first device 110 may configure an SSID, security, a wireless LAN IP address, and a subnet mask.

In step 820, the first device 110 transmits information required by the second device 120 to configure a wireless LAN interface. Information regarding a wireless LAN IP address, a subnet mask, a gateway address, a proxy address, and a port allocated to the second device 120 is transmitted to the second device 120.

In step 822, the first device 110 accesses the Internet via a mobile communication network. Furthermore, the first device 110 configures a NAT based on a wireless LAN IP address and a port allocated to the second device 120.

The second device 120 configures a wireless LAN interface based on the information received in step 820, and shares an Internet connection of the first device 110 that is established in step 822.

An ICS in the "Wi-fi Infra" mode may also be performed through the same methods described with reference to FIGS. 5 through 8. The first device 110 may receive information regarding an AP, to which the second device 120 is connected via a wireless LAN connection, from the second device 120. The first device 110 may receive information regarding an SSID, a private network IP address, a subnet mask, a gateway address, a proxy address, and a port of the AP from the second device 120 via a USB cable connection. The first device 110 may establish a wireless LAN connection between the first device 110 and the AP by configuring a wireless LAN interface of the first device 110 based on the received information. Since security-related information is also received via a USB cable, the wireless LAN connection may be established between the first device 110 and the AP without a complicated process, such as the setup of a user password. Furthermore, a wireless LAN connection may also be established with respect to an AP not broadcasting an SSID based on network information of the second device 120.

When an ICS, as described above with reference to FIGS. 2, 5, 6, 7, 8, and 9, is terminated, configurations of the network interface of the first device 110 and the network interface of the second device 120 are restored to configurations prior to the ICS.

The first device 110 and the second device 120 determine whether an ICS between the first device 110 and the second device 120 is valid. Based on a result of the determination, the first device 110 and the second device 120 selectively restore configurations of the network interfaces to configurations prior to the ICS.

As described above with reference to FIGS. 5 and 7, when an operation mode of a cable connection is switched to Ethernet mode and the cable connection is used for a network connection, it may be determined whether the cable connection is maintained. If the cable connection is terminated, it may be determined that an ICS is also terminated.

However, if the cable connection is only used for transmitting and receiving network information and a private network connection is established between the first device 110 and the second device 120 via a network interface other than the cable connection, such as a wireless LAN interface, it may be determined whether at least one of the cable connection and the wireless LAN connection is maintained between the first device 110 and the second device 120. Based on a result of the determination, configurations of network interfaces of the first device 110 and the second device 120 may be selectively restored to configurations of the network interfaces prior to the ICS.

Even if a cable connection is terminated, if a wireless LAN connection is maintained, it may be determined that an ICS is still valid. On the contrary, even if a wireless LAN connection is terminated, if a cable connection is maintained, it may be determined that an ICS is still valid.

It may be determined whether a wireless LAN connection is maintained based on hello packets that are periodically transmitted or received by the first device 110 or the second device 120. For example, if the first device 110 periodically transmits hello packets, the second device 120 may receive the hello packets and determine that a wireless LAN connection is maintained. On the contrary, if the second device 120 periodically transmits hello packets, the first device 110 may receive the hello packets and determine that a wireless LAN connection is maintained.

FIG. 9 is a diagram illustrating an ICS device of the first device 110, according to an embodiment of the present invention.

Referring to FIG. 9, the ICS device of the first device 110, according to an embodiment of the present invention, includes a program transmitting unit 910 and a network configuring unit 920.

The program transmitting unit 910 transmits, to the second device 120, a program for configuring a network interface via a cable connection to the second device 120. A configuration of a network interface may be a configuration for the first device 110 to share an Internet connection of the second device 120, or a configuration for the second device 120 to share an Internet connection of the first device 110.

When the first device 110 is connected to the second device 120 via a predetermined cable (USB cable), the first device 110 is recognized as a mobile storage medium, and a program stored in a predetermined storage space of the first device 110 may be transmitted to the second device 120.

The network configuring unit 920 exchanges messages for configuring network interfaces with the second device 120 based on a program that is transmitted by the program transmitting unit 910 and is being executed on the second device 120. The network configuring unit 920 exchanges messages including network information for sharing an internet connection according to any one of the plurality of modes described above, that is, "USB ICS" mode, "Wi-Fi Adhoc" mode, "Wi-Fi Infra" mode, "Tethering" mode, and "Soft AP" mode. A format of the exchanged messages is as described above with reference to FIGS. 4a and 4b.

After the exchange of messages including network information is completed, the network configuring unit 920 configures a network interface of the first device 110. A configuration of a network interface for providing an Internet connection of the first device 110 to the second device 120 or a configuration of a network interface for sharing an Internet connection of the second device 120 is performed. After a configuration of the network interface is completed, an Internet connection is shared via a private network between the first device 110 and the second device 120.

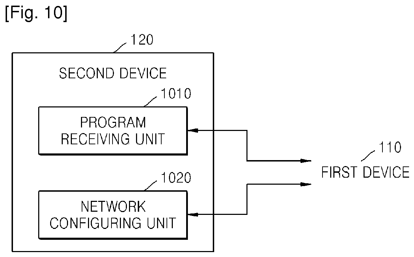

FIG. 10 is a diagram illustrating an ICS device of the second device 120, according to an embodiment of the present invention.

Referring to FIG. 10, the ICS device of the second device 120, according to an embodiment of the present invention, includes a program transmitting unit 1010 and a network configuring unit 1020.

The program transmitting unit 1010 receives a program for configuring a network interface via a cable connection from the first device 110. A configuration of a network interface may be a configuration for the first device 110 to share an Internet connection of the second device 120 or a configuration for the second device 120 to share an Internet connection of the first device 110.

When the first device 110 is connected to the second device 120 via a predetermined cable (USB cable), the first device 110 is recognized as a mobile storage medium, and a predetermined program is received from the first device 110. The received program may be automatically executed. Here, the received program may be automatically executed as a user selects auto-run function from among functions displayed on the screen of the second device 120, or may be automatically executed without user intervention.

The network configuring unit 1020 exchanges messages for configuring network interfaces with the first device 110 based on the program that is received by the program receiving unit 1010 and is being executed on the second device 120. The network configuring unit 1020 exchanges messages including network information for sharing an Internet connection according to any one of the plurality of modes described above, that is, "USB ICS" mode, "Wi-Fi Adhoc" mode, "Wi-Fi Infra" mode, "Tethering" mode, and "Soft AP" mode. A format of the exchanged messages is as described above with reference to FIGS. 4a and 4b.

After the exchange of messages including network information is completed, the network configuring unit 1020 configures a network interface of the second device 120. A configuration of a network interface for providing an Internet connection of the first device 110 to the second device 120 or a configuration of a network interface for sharing an Internet connection of the second device 120 is performed. After a configuration of the network interface is completed, an Internet connection is shared via a private network between the first device 110 and the second device 120.

The invention can also be embodied as computer readable codes on a computer readable recording medium.

For example, an apparatus for sharing an internet connection according to an embodiment of the present invention may include a bus coupled with each of units of the ICS device as shown in FIGS. 9 and 10 and at least one processor combined with the bus. Furthermore, the apparatus for sharing an Internet connection may include a memory that is combined with the bus to store instructions, received messages, or generated messages and is coupled with at least one processor for executing the instructions as described above.

Furthermore, the computer readable recording medium is any data storage device that can store data or software components that include instructions or code that can be read by a computer system. Examples of the computer readable recording medium include, for example, Read-Only Memories (ROMs), Random-Access Memories (RAMs), Compact Disk (CD)-ROMs, magnetic tapes, floppy disks, and optical data storage devices. The computer readable recording medium can also be distributed over network coupled computer systems so that the computer readable code is stored and executed in a distributed fashion.

While the present invention has been shown and described with reference to certain embodiments thereof, it will be understood by those of ordinary skill in the art that various changes in form and detail may be made therein without departing from the scope of the present invention as defined by the following claims.

## Claims

1. A method for configuring a first device (110) to share an Internet connection, the method comprising the steps of:
transmitting (214, 514, 614, 714, 814) a program for configuring network interfaces from a storage space in the first device (110) to a second device (120) via a cable;
exchanging (218, 620, 718, 820) messages between the first device (110) and the second device (120), via the cable, for configuration of network interfaces of the first device (110) and the second device, after the second device (120) executes the program, the network interfaces being between the first device (110) and the second device;
configuring (220, 522, 622, 818) the network interface of the first device (110) in accordance with the program and the messages exchanged between the first device (110) and the second device (120); and
sharing the Internet connection of at least one of the first device (110) and the second device (120) based on the configured network interface of the first device (110).

2. The method of Claim 1, further comprising:
determining whether sharing the Internet connection is valid based on the configured network interface of the first device (110); and
selectively restoring configurations of the network interfaces of the first device (110) and the second device (120) to configurations prior to the sharing of the Internet connection based on the result of the determination.

3. The method of claim 2, wherein the Internet connection is shared between the first device (110) and the second device (120) using a Wireless Local Area Network, LAN, connection as network interfaces between the first and the second device, and determining whether sharing the Internet connection is valid comprises determining whether the wireless LAN connection is maintained.

4. The method of claim 3, wherein determining whether the wireless LAN connection is maintained is based on hello packets that are periodically transmitted or received.

5. The method of claim 1, wherein the messages comprise at least one of first information that defines whether the cable provides a connection for data transmission and reception or a connection for network interface configuration, and second information which defines a mode for sharing the Internet connection.

6. The method of claim 5, wherein the mode comprises at least one of a mode for sharing the Internet connection of the second device (120) via the cable connection, a mode for sharing the Internet connection of the second device via the wireless LAN connection, a mode for accessing an access point, AP, to which the second device (120) is connected, a mode for using the first device (110) as an AP, and a mode for sharing the Internet connection of the first device (110) via the cable connection.

7. A method for configuring a second device (120) to share an Internet connection, the method comprising the steps of:
receiving a program for configuring network interfaces at the second device (120), from a storage space of a first device (110), via a cable;
executing the program on the second device (120);
exchanging (218, 620, 718, 820) messages between the first device (110) and the second device (120), via the cable, for configuration of network interfaces of the first device (110) and the second device (120), the network interfaces being between the first device (110) and the second device (120);
configuring (222, 524, 618, 722) the network interface of the second device (120) in accordance with the program and the messages exchanged between the first device (110) and the second device (120); and
sharing the Internet connection of at least one of the first device (110) and the second device (120) based on the configured network interface of the second device (120).

8. The method of Claim 7, further comprising:
determining whether sharing the Internet connection is valid based on the configured network interface of the first device (110); and
selectively restoring configurations of the network interfaces of the first device (110) and the second device (120) to configurations prior to the sharing of the Internet connection based on the result of the determination.

9. The method of claim 8, wherein the Internet connection is shared between the first device (110) and the second device (120) using a Wireless Local Area Network, LAN, connection as network interfaces between the first and the second device, and determining whether sharing the Internet connection is valid comprises determining whether the wireless LAN connection is maintained.

10. The method of claim 9, wherein determining whether the wireless LAN connection is maintained is based on hello packets that are periodically transmitted or received.

11. The method of claim 7, wherein the messages comprise at least one of first information that defines whether the cable provides a connection for data transmission and reception or a connection for network interface configuration, and second information which defines a mode for sharing the Internet connection.

12. The method of claim 11, wherein the mode comprises at least one of a mode for sharing the Internet connection of the second device (120) via the cable connection, a mode for sharing the Internet connection of the second device (120) via the wireless LAN connection, a mode for accessing an access point, AP, to which the second device (120) is connected, a mode for using the first device (110) as an AP, and a mode for sharing the Internet connection of the first device (110) via the cable connection.

13. An Internet connection configuring apparatus of a first device (110) for configuring sharing of an Internet connection, the apparatus comprising:
a program transmitting unit (910) arranged to transmit a program for configuring network interfaces from a storage space of the first device (110) to a second device (120) via a cable; and
a network configuring unit (920) arranged:
to exchange messages between the first device (110) and the second device (120) for configuration of network interfaces of the first device (110) and the second device (120), after the second device executes the program, the network interfaces being between the first device (110) and the second device (120);
to configure the network interface of the first device (110) in accordance with the program and the messages exchanged between the first device (110) and the second device (120); and
to share the Internet connection of at least one of the first device (110) and the second device (120) based on the configured network interface of the first device (110).

14. An Internet connection configuring apparatus of a second device (120) for configuring sharing of an Internet connection, the apparatus comprising:
a program receiving unit (1010) arranged to receive a program for configuring network interfaces at the second device (120), from a storage space of a first device (110), via a cable, wherein the program is stored in the first device (110); and
a network configuring unit (1020) arranged:
to exchange messages between the first device (110) and the second device (120) for configuration of network interfaces of the first device (110) and the second device, after the second device (120) executes the program, the network interfaces being between the first device (110) and the second device (120);
to configure a network interface of the second device (120) in accordance with the program and the messages exchanged between the first device (110) and the second device (120); and
to share the Internet connection of at least one of the first device (110) and the second device (120) based on the configured network interface of the second device (120).

15. A computer-readable recording medium having embodied thereon a program for executing the method of claim 1 or 7.

## Patentansprüche

1. Verfahren zum Konfigurieren einer ersten Vorrichtung (110) für eine gemeinsame Nutzung einer Internetverbindung, wobei das Verfahren die folgenden Schritte umfasst:
Übermitteln (214, 514, 614, 714, 814) eines Programms zum Konfigurieren von Netzwerkschnittstellen über ein Kabel von einem Speicherplatz in der ersten Vorrichtung (110) zu einer zweiten Vorrichtung (120);
Austauschen (218, 620, 718, 820) von Nachrichten über das Kabel zwischen der ersten Vorrichtung (110) und der zweiten Vorrichtung (120) zur Konfiguration von Netzwerkschnittstellen der ersten Vorrichtung (110) und der zweiten Vorrichtung nachdem die zweite Vorrichtung (120) das Programm ausgeführt hat, wobei sich die Netzwerkschnittstellen zwischen der ersten Vorrichtung (110) und der zweiten Vorrichtung befinden;
Konfigurieren (220, 522, 622, 818) der Netzwerkschnittstelle der ersten Vorrichtung (110) gemäß dem Programm und den Nachrichten, die zwischen der ersten Vorrichtung (110) und der zweiten Vorrichtung (120) ausgetauscht werden; und
gemeinsames Nutzen der Internetverbindung wenigstens einer Vorrichtung der ersten Vorrichtung (110) und der zweiten Vorrichtung (120) auf der Basis der konfigurierten Netzwerkschnittstelle der ersten Vorrichtung (110).

2. Verfahren nach Anspruch 1, ferner umfassend:
Bestimmen, ob auf der Basis der konfigurierten Netzwerkschnittstelle der ersten Vorrichtung (110) die gemeinsame Nutzung der Internetverbindung gültig ist; und
selektives Wiederherstellen von Konfigurationen der Netzwerkschnittstellen der ersten Vorrichtung (110) und der zweiten Vorrichtung (120) auf Konfigurationen vor der gemeinsamen Nutzung der Internetverbindung auf der Basis des Ergebnisses des Bestimmens.

3. Verfahren nach Anspruch 2, wobei die Internetverbindung zwischen der ersten Vorrichtung (110) und der zweiten Vorrichtung (120) unter Verwendung einer Wireless Area Network(WLAN)-Verbindung als Netzwerkschnittstellen zwischen der ersten und der zweiten Vorrichtung gemeinsam genutzt wird,
und wobei das Bestimmen, ob die Internetverbindung gültig ist, das Bestimmen umfasst, ob die WLAN-Verbindung aufrechterhalten wird.

4. Verfahren nach Anspruch 3, wobei das Bestimmen, ob die WLAN-Verbindung aufrechterhalten wird, auf Hello-Paketen basiert, die periodisch übermittelt oder empfangen werden.

5. Verfahren nach Anspruch 1, wobei die Nachrichten wenigstens erste oder zweite Informationen umfassen, wobei die ersten Informationen definieren, ob das Kabel eine Verbindung zur Übermittlung und für den Empfang von Daten oder eine Verbindung zur Netzwerkschnittstellenkonfiguration bereitstellt, und wobei die zweiten Informationen einen Modus zur gemeinsamen Nutzung der Internetverbindung definieren.

6. Verfahren nach Anspruch 5, wobei der Modus mindestens einen der folgenden Modi umfasst: einen Modus zur gemeinsamen Nutzung der Internetverbindung der zweiten Vorrichtung (120) über die Kabelverbindung, einen Modus zur gemeinsamen Nutzung der Internetverbindung der zweiten Vorrichtung über die WLAN-Verbindung, einen Modus für den Zugang zu einem Zugangspunkt, AP, mit dem die zweite Vorrichtung (120) verbunden ist, einen Modus zur Verwendung der ersten Vorrichtung (110) als einen AP, und einen Modus zur gemeinsamen Nutzung der Internetverbindung der ersten Vorrichtung (110) über die Kabelverbindung.

7. Verfahren zum Konfigurieren einer zweiten Vorrichtung (120) für eine gemeinsame Nutzung einer Internetverbindung, wobei das Verfahren die folgenden Schritte umfasst:
Empfangen eines Programms zum Konfigurieren von Netzwerkschnittstellen über ein Kabel von einem Speicherplatz einer ersten Vorrichtung (110) an der zweiten Vorrichtung (120);
Ausführen des Programms auf der zweiten Vorrichtung (120);
Austauschen (218, 620, 718, 820) von Nachrichten über das Kabel zwischen der ersten Vorrichtung (110) und der zweiten Vorrichtung (120) zur Konfiguration von Netzwerkschnittstellen der ersten Vorrichtung (110) und der zweiten Vorrichtung (120), wobei sich die Netzwerkschnittstellen zwischen der ersten Vorrichtung (110) und der zweiten Vorrichtung befinden (120);
Konfigurieren (222, 524, 618, 722) der Netzwerkschnittstelle der zweiten Vorrichtung (120) gemäß dem Programm und den Nachrichten, die zwischen der ersten Vorrichtung (110) und der zweiten Vorrichtung (120) ausgetauscht werden; und
gemeinsames Nutzen der Internetverbindung wenigstens einer Vorrichtung der ersten Vorrichtung (110) und der zweiten Vorrichtung (120) auf der Basis der konfigurierten Netzwerkschnittstelle der zweiten Vorrichtung (120).

8. Verfahren nach Anspruch 7, ferner umfassend:
Bestimmen, ob auf der Basis der konfigurierten Netzwerkschnittstelle der ersten Vorrichtung (110) die gemeinsame Nutzung der Internetverbindung gültig ist; und
selektives Wiederherstellen von Konfigurationen der Netzwerkschnittstellen der ersten Vorrichtung (110) und der zweiten Vorrichtung (120) auf Konfigurationen vor der gemeinsamen Nutzung der Internetverbindung auf der Basis des Ergebnisses des Bestimmens.

9. Verfahren nach Anspruch 8, wobei die Internetverbindung zwischen der ersten Vorrichtung (110) und der zweiten Vorrichtung (120) unter Verwendung einer Wireless Area Network(WLAN)-Verbindung als Netzwerkschnittstellen zwischen der ersten und der zweiten Vorrichtung gemeinsam genutzt wird,
und wobei das Bestimmen, ob die Internetverbindung gültig ist, das Bestimmen umfasst, ob die WLAN-Verbindung aufrechterhalten wird.

10. Verfahren nach Anspruch 9, wobei das Bestimmen, ob die WLAN-Verbindung aufrechterhalten wird, auf Hello-Paketen basiert, die periodisch übermittelt oder empfangen werden.

11. Verfahren nach Anspruch 7, wobei die Nachrichten wenigstens erste oder zweite Informationen umfassen, wobei die ersten Informationen definieren, ob das Kabel eine Verbindung zur Übermittlung und für den Empfang von Daten oder eine Verbindung zur Netzwerkschnittstellenkonfiguration bereitstellt, und wobei die zweiten Informationen einen Modus zur gemeinsamen Nutzung der Internetverbindung definieren.

12. Verfahren nach Anspruch 11, wobei der Modus mindestens einen der folgenden Modi umfasst: einen Modus zur gemeinsamen Nutzung der Internetverbindung der zweiten Vorrichtung (120) über die Kabelverbindung, einen Modus zur gemeinsamen Nutzung der Internetverbindung der zweiten Vorrichtung über die WLAN-Verbindung, einen Modus für den Zugang zu einem Zugangspunkt, AP, mit dem die zweite Vorrichtung (120) verbunden ist, einen Modus zur Verwendung der ersten Vorrichtung (110) als einen AP, und einen Modus zur gemeinsamen Nutzung der Internetverbindung der ersten Vorrichtung (110) über die Kabelverbindung.

13. Vorrichtung zur Konfiguration einer Internetverbindung einer ersten Vorrichtung (110) zum Konfigurieren der gemeinsamen Nutzung einer Internetverbindung, wobei die Vorrichtung folgendes umfasst:
eine Programmübermittlungseinheit (910), die so angeordnet ist, dass sie ein Programm zur Konfiguration von Netzwerkschnittstellen über ein Kabel von einem Speicherplatz der ersten Vorrichtung (110) zu einer zweiten Vorrichtung (120) übermittelt; und
eine Netzwerkkonfigurationseinheit (920), die zu folgenden Zwecken angeordnet ist:
zum Austauschen von Nachrichten zwischen der ersten Vorrichtung (110) und der zweiten Vorrichtung (120) zur Konfiguration von Netzwerkschnittstellen der ersten Vorrichtung (110) und der zweiten Vorrichtung (120) nachdem die zweite Vorrichtung das Programm ausgeführt hat, wobei sich die Netzwerkschnittstellen zwischen der ersten Vorrichtung (110) und der zweiten Vorrichtung (120) befinden;
zum Konfigurieren der Netzwerkschnittstelle der ersten Vorrichtung (110) gemäß dem Programm und den Nachrichten, die zwischen der ersten Vorrichtung (110) und der zweiten Vorrichtung (120) ausgetauscht werden; und
zum gemeinsamen Nutzen der Internetverbindung wenigstens einer Vorrichtung der ersten Vorrichtung (110) und der zweiten Vorrichtung (120) auf der Basis der konfigurierten Netzwerkschnittstelle der ersten Vorrichtung (110).

14. Vorrichtung zur Konfiguration einer Internetverbindung einer ersten Vorrichtung (120) zum Konfigurieren der gemeinsamen Nutzung einer Internetverbindung, wobei die Vorrichtung folgendes umfasst:
eine Programmempfangseinheit (1010), die so angeordnet ist, dass sie ein Programm zur Konfiguration von Netzwerkschnittstellen über ein Kabel von einem Speicherplatz einer ersten Vorrichtung (110) an der zweiten Vorrichtung (120) empfängt, wobei das Programm in der ersten Vorrichtung (110) gespeichert wird; und
eine Netzwerkkonfigurationseinheit (1020), die zu folgenden Zwecken angeordnet ist:
zum Austauschen von Nachrichten zwischen der ersten Vorrichtung (110) und der zweiten Vorrichtung (120) zur Konfiguration von Netzwerkschnittstellen der ersten Vorrichtung (110) und der zweiten Vorrichtung nachdem die zweite Vorrichtung (120) das Programm ausgeführt hat, wobei sich die Netzwerkschnittstellen zwischen der ersten Vorrichtung (110) und der zweiten Vorrichtung (120) befinden;
zum Konfigurieren der Netzwerkschnittstelle der zweiten Vorrichtung (120) gemäß dem Programm und den Nachrichten, die zwischen der ersten Vorrichtung (110) und der zweiten Vorrichtung (120) ausgetauscht werden; und
zum gemeinsamen Nutzen der Internetverbindung wenigstens einer Vorrichtung der ersten Vorrichtung (110) und der zweiten Vorrichtung (120) auf der Basis der konfigurierten Netzwerkschnittstelle der zweiten Vorrichtung (120).

15. Computerlesbares Aufzeichnungsmedium, auf dem ein Programm zum Ausführen des Verfahrens nach einem der Ansprüche 1 bis 7 enthalten ist.

## Revendications

1. Procédé de configuration d'un premier dispositif (110) pour partager une connexion Internet, le procédé comprenant les étapes consistant à :
transmettre (214, 514, 614, 714, 814) un programme pour configurer des interfaces réseau d'un espace de stockage dans le premier dispositif (110) vers un second dispositif (120) par l'intermédiaire d'un câble ;
échanger (218, 620, 718, 820) des messages entre le premier dispositif (110) et le second dispositif (120), par l'intermédiaire du câble, pour la configuration des interfaces réseau du premier dispositif (110) et du second dispositif, après que le second dispositif (120) exécute le programme, les interfaces réseau étant entre le premier dispositif (110) et le second dispositif ;
configurer (220, 522, 622, 818) l'interface réseau du premier dispositif (110) conformément au programme et aux messages échangés entre le premier dispositif (110) et le second dispositif (120) ; et
partager la connexion Internet du premier dispositif (110) et/ou du second dispositif (120) en fonction de l'interface réseau configurée du premier dispositif (110).

2. Procédé selon la revendication 1, comprenant en outre les étapes consistant à :
déterminer si le partage de la connexion Internet est valide en fonction de l'interface réseau configurée du premier dispositif (110) ; et
restaurer sélectivement des configurations des interfaces réseau du premier dispositif (110) et du second dispositif (120) dans des configurations avant le partage de la connexion Internet en fonction du résultat de la détermination.

3. Procédé selon la revendication 2, la connexion Internet étant partagée entre le premier dispositif (110) et le second dispositif (120) à l'aide d'une connexion de réseau local sans fil, LAN, comme interfaces réseau entre le premier et le second dispositif,
et la détermination de la validité du partage de la connexion Internet comprenant l'étape consistant à déterminer si la connexion LAN sans fil est maintenue.

4. Procédé selon la revendication 3, la détermination du maintien de la connexion LAN sans fil étant basée sur des paquets hello qui sont transmis ou reçus périodiquement.

5. Procédé selon la revendication 1, les messages comprenant des premières informations qui définissent si le câble fournit une connexion pour la transmission et la réception de données ou une connexion pour la configuration de l'interface réseau, et/ou des secondes informations qui définissent un mode de partage de la connexion Internet.

6. Procédé selon la revendication 5, le mode comprenant au moins un mode pour partager la connexion Internet du second dispositif (120) par l'intermédiaire de la connexion câblée, un mode pour partager la connexion Internet du second dispositif par l'intermédiaire de la connexion LAN sans fil, un mode pour accéder à un point d'accès, AP, auquel le second dispositif (120) est connecté, un mode pour utiliser le premier dispositif (110) comme AP, et un mode pour partager la connexion Internet du premier dispositif (110) par l'intermédiaire de la connexion câblée.

7. Procédé de configuration d'un second dispositif (120) pour partager une connexion Internet, le procédé comprenant les étapes consistant à :
recevoir un programme pour configurer des interfaces réseau au niveau du second appareil (120), à partir d'un espace de stockage d'un premier appareil (110), par l'intermédiaire d'un câble ;
exécuter le programme sur le second dispositif (120) ;
échanger (218, 620, 718, 820) des messages entre le premier dispositif (110) et le second dispositif (120), par l'intermédiaire du câble, pour la configuration des interfaces réseau du premier dispositif (110) et du second dispositif (120), les interfaces réseau étant entre le premier dispositif (110) et le second dispositif (120) ;
configurer (222, 524, 618, 722) l'interface réseau du second dispositif (120) conformément au programme et aux messages échangés entre le premier dispositif (110) et le second dispositif (120) ; et
partager la connexion Internet du premier dispositif (110) et/ou du second dispositif (120) en fonction de l'interface réseau configurée du second dispositif (120).

8. Procédé selon la revendication 7, comprenant en outre les étapes consistant à :
déterminer si le partage de la connexion Internet est valide en fonction de l'interface réseau configurée du premier dispositif (110) ; et
restaurer sélectivement des configurations des interfaces réseau du premier dispositif (110) et du second dispositif (120) dans des configurations avant le partage de la connexion Internet en fonction du résultat de la détermination.

9. Procédé selon la revendication 8, la connexion Internet étant partagée entre le premier dispositif (110) et le second dispositif (120) à l'aide d'une connexion de réseau local sans fil, LAN, comme interfaces réseau entre le premier et le second dispositif,
et la détermination de la validité du partage de la connexion Internet comprenant l'étape consistant à déterminer si la connexion LAN sans fil est maintenue.

10. Procédé selon la revendication 9, la détermination du maintien de la connexion LAN sans fil étant basée sur des paquets hello qui sont transmis ou reçus périodiquement.

11. Procédé selon la revendication 7, les messages comprenant des premières informations qui définissent si le câble fournit une connexion pour la transmission et la réception de données ou une connexion pour la configuration de l'interface réseau, et/ou des secondes informations qui définissent un mode de partage de la connexion Internet.

12. Procédé selon la revendication 11, le mode comprenant au moins un mode pour partager la connexion Internet du second dispositif (120) par l'intermédiaire de la connexion câblée, un mode pour partager la connexion Internet du second dispositif (120) par l'intermédiaire de la connexion LAN sans fil, un mode pour accéder à un point d'accès, AP, auquel le second dispositif (120) est connecté, un mode pour utiliser le premier dispositif (110) comme AP, et un mode pour partager la connexion Internet du premier dispositif (110) via par l'intermédiaire de la connexion câblée.

13. Appareil de configuration de connexion Internet d'un premier dispositif (110) pour configurer le partage d'une connexion Internet, l'appareil comprenant :
une unité de transmission de programme (910) pour transmettre un programme pour configurer des interfaces réseau d'un espace de stockage du premier dispositif (110) vers un second dispositif (120) par l'intermédiaire d'un câble ; et
une unité de configuration de réseau (920) conçue :
pour échanger des messages entre le premier dispositif (110) et le second dispositif (120) pour la configuration des interfaces réseau du premier dispositif (110) et du second dispositif (120), après que le second dispositif exécute le programme, les interfaces réseau étant entre le premier dispositif (110) et le second dispositif (120) ;
pour configurer l'interface réseau du premier dispositif (110) conformément au programme et aux messages échangés entre le premier dispositif (110) et le second dispositif (120) ; et
pour partager la connexion Internet du premier dispositif (110) et/ou du second dispositif (120) en fonction de l'interface réseau configurée du premier dispositif (110).

14. Appareil de configuration de connexion Internet d'un second dispositif (120) pour configurer le partage d'une connexion Internet, l'appareil comprenant :
une unité de réception de programme (1010) conçue pour recevoir un programme pour configurer des interfaces réseau au niveau du second dispositif (120), à partir d'un espace de stockage d'un premier dispositif (110), par l'intermédiaire d'un câble, le programme étant stocké dans le second dispositif (110) ; et
une unité de configuration de réseau (1020) conçue :
pour échanger des messages entre le premier dispositif (110) et le second dispositif (120) pour la configuration des interfaces réseau du premier dispositif (110) et du second dispositif, après que le second dispositif (120) exécute le programme, les interfaces réseau étant entre le premier dispositif (110) et le second dispositif (120) ;
pour configurer une interface réseau du second dispositif (120) conformément au programme et aux messages échangés entre le premier dispositif (110) et le second dispositif (120) ; et
pour partager la connexion Internet du premier dispositif (110) et/ou du second dispositif (120) en fonction de l'interface réseau configurée du second dispositif (120).

15. Support d'enregistrement lisible par ordinateur sur lequel est incorporé un programme pour exécuter le procédé selon la revendication 1 ou 7.
